# EUROPEAN PATENT SPECIFICATION

(11) **EP 4 111 177 B1**
(45) Date of publication and mention of the grant of the patent: **13.12.2023**
(21) Application number: 20707617.5
(22) Date of filing: 27.02.2020
(51) Int. Cl.: G01N 21/552, G01N 21/84

(54) **A METHOD FOR DETERMINING A MATERIAL PROPERTY OF A SOLID SUBSTRATE**
VERFAHREN ZUR BESTIMMUNG EINER MATERIALEIGENSCHAFT EINES FESTEN SUBSTRATS
PROCÉDÉ DE DÉTERMINATION D'UNE PROPRIÉTÉ MATÉRIELLE D'UN SUBSTRAT SOLIDE

(43) Date of publication of application: 04.01.2023
(73) Proprietor: Friemann Dmitriev, Alexander, 412 96 Gothenburg (SE)
(72) Inventor: LYSENKO, Oleg, 412 80 Göteborg (SE); KAPAKLIS, Vassilios, 756 56 Uppsala (SE); CIUCIULKAITE, Agne, 752 72 Uppsala (SE); VAVASSORI, Paolo, 20012 Donostia-San Sebastian (ES); FRIEMANN DMITRIEV, Alexander, 412 96 Gothenburg (SE)
(74) Representative: Valea AB
(86) International application number: PCT/EP2020/055095
(87) International publication number: WO 2021/170235

(56) References cited:
- KR-A- 20100 082 820
- US-A1- 2010 053 598
- QIN F ET AL: "Role of shape in substrate-induced plasmonic shift and mode uncovering on gold nanocrystals", NANOSCALE, vol. 8, no. 40, 2016, pages 17645-17657, XP055739531, United Kingdom ISSN: 2040-3364, DOI: 10.1039/C6NR06387J
- VENKATAPATHI M AND TIWARI A K: "Radiative and non-radiative effects of a substrate on localized plasmon resonance of particles", JOURNAL OF APPLIED PHYSICS, AMERICAN INSTITUTE OF PHYSICS, US, vol. 112, no. 1, 2012, pages 13529-13529, XP012166042, ISSN: 0021-8979, DOI: 10.1063/1.4736544 [retrieved on 2012-07-11]
- SADRI-MOSHKENANI P ET AL: "Plasmonic detection of possible defects in multilayer nanohole array consisting of essential materials in simplified STT-RAM cell", PROCEEDINGS OF SPIE; [PROCEEDINGS OF SPIE ISSN 0277-786X VOLUME 10524], SPIE, US, vol. 10346, 25 August 2017 (2017-08-25), pages 1034639-1034639, XP060092596, DOI: 10.1117/12.2277545 ISBN: 978-1-5106-1533-5
- KOCHERGIN V ET AL: "Plasmonic enhancement of ultrafast all-optical magnetization reversal", PLASMONICS: METALLIC NANOSTRUCTURES AND THEIR OPTICAL PROPERTIES IX, SPIE, 1000 20TH ST. BELLINGHAM WA 98225-6705 USA, vol. 8096, no. 1, 8 September 2011 (2011-09-08), pages 1-7, XP060018667, DOI: 10.1117/12.893475 [retrieved on 1901-01-01]
- CIUCIULKAITE A ET AL: "Design of Amorphous Tb_xCo_100-x Alloys for All-Optical Magnetization Switching", ARXIV.ORG, CORNELL UNIVERSITY LIBRARY, 201 OLIN LIBRARY CORNELL UNIVERSITY ITHACA, NY 14853, 18 February 2020 (2020-02-18), XP081602227,

## Description

### TECHNICAL FIELD

The invention relates to a device/method for determining a material property of a solid substrate. The invention further relates to the use of an array of plasmonic nanoparticles provided on a solid substrate for determining a material property of the solid substrate.

### BACKGROUND

Localized surface plasmons, also referred to as nanoplasmons, are collective electron oscillations that couple to electromagnetic radiation and thereby localize and enhance the electromagnetic field on a nanoscale. Plasmonic nanostructures may be understood as nanoplasmonic optical antennas which are able to interact with visible light similarly to how regular radio or mobile phone antennas operate, i.e., by capturing the propagating radiation and transforming it into local current at resonance frequencies. With such nanoplasmonic optical antennas, very high electromagnetic field concentrations become available that can be explored for sensing applications.

Nanoplasmonic sensing uses the fact that plasmonic resonances of nanoplasmonic optical antennas, such as metal particles, are very sensitive to the environment of the nanostructures. Specifically, changing the refractive index of the nanoscopic regions where the electromagnetic field is concentrated via localized surface plasmons can significantly shift the resonance of such antennas and thus change the wavelength at which the antenna scatters and absorbs light. This creates a far-field optical read-out possibility for detecting the local refractive index of for example a gas surrounding the antennas.

Nanoplasmonic sensing is widely explored in applications, and several commercial solutions exist for detecting various gases and/or biological species, such as proteins, by means of such sensing. Various schemes exist for improving the sensitivity of nanoplasmonic optical antennas to changes of the surrounding refractive index. Such schemes have been previously described by for example A. Dmitriev (Ed.), Nanoplasmonic Sensors, Springer New York (2012).

US 2010/053598 A1 relates to the detection of deformation in a substrate, including detecting one or more changes in one or more emission characteristics of at least one pair of plasmon-coupled nanoparticles associated with the substrate.

KR 2010 0082820 A relates to an optical apparatus with a plasmonic device which generates a near field having a variable strength according to properties of an object-under-test, in front of a nano-aperture of a thin metal film.

In "Role of shape in substrate-induced plasmonic shift and mode uncovering on gold nanocrystals", NANOSCALE, vol. 8, no. 40, 2016, Qin F et al. present a study of the effects of substrates with distinct dielectric functions on the plasmonic properties of three types of Au nanocrystals.

### DEFINITIONS

A plasmonic nanostructure is to be interpreted as a metallic and/or semiconductor component, particle or structure having a size and shape allowing for the exploitation of localized surface plasmon resonances. The size of such a plasmonic nanostructure may be such that the nanostructure has an equivalent spherical diameter of 1 nm-10 µm, depending on the shape and material of the nanostructure, wherein larger sizes within this range are generally applicable to doped semiconductor components.

A nanoplasmonic optical antenna is to be understood as a plasmonic nanostructure.

### SUMMARY

An object of the invention is to provide a method for determining a material property of a solid substrate, which method is in at least some aspect improved with respect to prior art methods.

According to a first aspect of the invention, the object is achieved by a method for determining a material property of a solid substrate according to claim 1. The method comprises, *inter alia* and as further defined with claim 1,
- providing an array of plasmonic nanostructures on at least one portion of the substrate,
- illuminating the at least one portion of the substrate on which the array of plasmonic nanostructures is arranged,
- determining an optical extinction and/or reflectance peak of the illuminated array of plasmonic nanostructures provided on the substrate,
- based on the determined optical extinction and/or reflectance peak, determining the material property of the at least one portion of the substrate.

According to a second aspect of the invention, the above defined object is achieved by use of an array of plasmonic nanostructures according to the indeoendent use claim 14. The array of plasmonic nanostructures is provided on at least one portion of a solid substrate for determining a material property of the at least one portion of the solid substrate based on an optical extinction and/or reflectance peak of the array of plasmonic nanostructures, the optical extinction and/or reflectance peak being detected when illuminating the at least one portion of the solid substrate on which the array of plasmonic nanostructures is provided.

Within the scope of the present invention, it has been realized that plasmonic nanostructures provided on a surface of a solid substrate may be used not only for determining properties of e.g. a solid, gaseous or liquid medium surrounding nanostructures provided on the solid substrate, but also for determining material properties of the solid substrate itself, which material properties are related to a refractive index of the material. This enables quick and accurate determination of material properties related to the refractive index of the solid substrate, such as atomic compositions of thin films and similar.

The proposed method could be used for sensing with high sensitivity the compositions of various multi-component functional thin films, including for example magnetic tricomponent systems, like GdFeCo, in which the composition defines the ability of such systems to be switched in their magnetization state or remagnetized by ultra-short (femtosecond) light pulses, or steel carbide thin films in which the composition defines stress in the thin film and its eventual hardness.

In practice, the array of plasmonic nanostructures may be realized as an 'ID tag' having a size of a few mm². The ID tag may be provided on a wafer provided with a functional thin film, delivered by a material supplier to a customer using the wafer in device manufacturing. The ID tag read-out may for example be performed by illuminating the ID tag with a mobile phone flash or another light source and detecting the spectrum of the reflected light off such a tag in the visible-near-IR spectral range by a compact add-on spectrometer or a mobile phone camera. The detected spectrum can be matched with a database that provides tabulated values of the spectral peak position vs. atomic concentrations / compositions for a given set of materials in the thin film. Such a spectrum matching functionality can be realized with a mobile phone application.

The optical extinction peak is generally determined in the case of a transparent solid substrate, while as the reflectance peak is used in the case of an opaque or reflective solid substrate, or in case of a semi-transparent solid substrate.

The array of plasmonic nanostructures may be an ordered array, in which the nanostructures are arranged in accordance with a periodic pattern, or it may be a disordered array lacking short- and/or long-range periodicity. The array may exhibit a short-range order but lack long-range order. In this case, the nanostructures may be arranged such that there is a characteristic spacing between neighbouring nanostructures although the nanostructures are not arranged in a periodic pattern. The array of plasmonic nanostructures may be fabricated using known nanoscale manufacturing techniques. Such techniques include top-down techniques such as lithographic techniques, for example electron beam lithography, focused ion-beam lithography, (nano)imprint lithography and photolithography, and bottom-up techniques relying on self-assembly of nanostructures.

Advantageous features are disclosed in the dependent claims. It is to be understood that features disclosed in connection with the claimed method are also relevant in connection with the claimed use.

Optionally, illuminating the at least one portion of the substrate comprises illuminating the at least one portion of the substrate with light from a spectral range including visible light and/or near-infrared light, and/or with single-wavelength or essentially single-wavelength light. The light may preferably comprise white light. For example, light from a flash light, a mobile phone flash, or another light source may be used. By "essentially single wavelength" is herein to be understood single wavelength light with a given spectral broadening. Light source providing such light include lasers, such as portable laser pointers / laser diodes.

Optionally, determining the optical extinction and/or reflectance peak of the illuminated array of plasmonic nanostructures comprises detecting a spectrum comprising at least light reflected off and/or light scattered off the illuminated array. In a transmission mode, optical extinction may be measured, including scattering and absorption, while as otherwise reflectance may be measured.

According to the invention, the material property is a chemical composition and/or an atomic composition of the at least one portion of the substrate. In this case, determining the material property comprises determining the chemical composition and/or the atomic composition of the at least one portion of the substrate. The chemical / atomic composition affects the refractive index of the at least one portion of the substrate and thereby also affects the optical extinction and/or reflectance peak of the illuminated array of plasmonic nanostructures provided on the substrate.

Optionally, the at least one portion of the substrate comprises a metallic material. In this case, the material property may be a material property of the metallic material.

Optionally, the metallic material is a magnetic metal alloy comprising at least one element selected from the group of Fe, Co and Ni. Such metal alloys may be used in e.g. ferromagnetic or ferrimagnetic or antiferromagnetic thin films used in all-optical ultrafast magnetization switching applications.

Optionally, the metallic material is in the form of a thin film. The thin film comprises at least one metallic layer, but may comprise more than one metallic layer, such as two or more metallic layers, in which case the method may be used for determining the material property of at least one metallic layer of the thin film, such as of a metallic layer at a depth of 20 nm or less from a surface of the solid substrate. The at least one portion of the substrate herein comprises the thin film, or at least one layer of the thin film.

Optionally, the thin film is a terbium-cobalt thin film having an atomic composition TbₓCo₁₀₀₋ₓ, wherein determining the material property comprises determining the number x. The material property is thus the atomic composition of the thin film.

Optionally, the thin film is a gadolinium-iron-cobalt thin film having an atomic composition GdₓFe_{y}Co_{z}, wherein determining the material property comprises determining at least one of the numbers x, y and z. The material property is thus the atomic composition of the thin film.

Optionally, the at least one portion of the substrate comprises a titanium carbide (TiC) or tungsten carbide (WC) material thin film. The material property may be a chemical, microstructural or physical property affecting the refractive index of the TiC or WC material affecting its hardness. The material property which is determined may be a slight deviation in C, Ti and/or W concentrations from 50%.

Optionally, the method further comprises:
- providing a dielectric coating on the substrate,
wherein the array of plasmonic nanostructures is provided on a surface of said dielectric coating, or wherein the array of plasmonic nanostructures is provided between the substrate and said dielectric coating. The coating may have a thickness of a few nanometers, such as 0.5-10 nm. The dielectric coating serves to prevent the oxidation or any other chemical or structural changes in previously described magnetic films.

By providing the dielectric coating on top of the plasmonic nanostructures, the nanostructures are protected by the dielectric coating. It is also possible to provide a first thin dielectric coating layer between the substrate and the array of plasmonic nanostructures, and a second thin dielectric coating layer atop the plasmonic nanostructures, the plasmonic nanostructures thus being embedded in the dielectric coating.

Optionally, the dielectric coating comprises aluminium oxide (alumina), such as Al₂O₃. The dielectric coating may for example consist of an aluminium oxide coating. The dielectric coating may alternatively comprise silicon dioxide (silica, SiO₂) or any other metal or semiconductor element oxide.

Optionally, the plasmonic nanostructures have a mean equivalent diameter of 10-500 nm, or 20-400 nm, or 30-200 nm, as measured in a plane parallel with a surface on which the plasmonic nanostructures are provided. The mean equivalent diameter may for example be understood as a mean equivalent spherical diameter. The size may e.g. be determined using image analysis of scanning and/or transmission electron microscopy images, or by atomic force microscopy and/or profilometry images. Larger nanostructures can be identified by the high-resolution optical microscopy (confocal, high magnification, with digital zoom).

Optionally, the plasmonic nanostructures are metal rings having an outer diameter of 100-300 nm and an inner diameter of 10-100 nm as measured in a plane parallel with a surface on which the metal rings are provided. The metal rings may be noble metal rings, comprising Au and/or Ag and/or Cu and/or Al and/or alloys thereof. Rings are particularly advantageous since they have two optical modes, of which a long-wavelength mode is more sensitive than that of a nanodisk at the same wavelength, such as about twice as sensitive. The metal rings may have a centre axis extending perpendicularly to the solid substrate on which the rings are provided. Alternatively, the nanostructures may for example be in the form of particles, disks, cylinders, ellipses and/or spheres.

Optionally, providing the array of plasmonic nanostructures comprises using nanoimprint lithography. This provides a cost-efficient way of producing the nanostructures in a highly reproducible manner. Nanoimprint lithography may be used to provide an ordered or a disordered array of nanostructures depending on a template used in the nanoimprint process. The nanostructures may alternatively be transferred from another substrate onto the solid substrate.

Optionally, providing the array of plasmonic nanostructures comprises using a colloidal lithography based fabrication method to provide a short-range ordered array of plasmonic nanostructures. This is a relatively fast and efficient way of providing a short-range ordered array of plasmonic nanostructures lacking long-range order, thereby eliminating long-range optical coupling effects such as optical diffraction, Wood anomalies and similar.

Optionally, determining the material property comprises comparing the detected optical extinction and/or reflectance peak to stored data describing said optical extinction and/or reflectance peak as a function of the material property. The stored data may be in the form of tabulated values.

Further advantages and advantageous features of the invention are disclosed in the following description.

### BRIEF DESCRIPTION OF THE DRAWINGS

With reference to the appended drawings, below follows a more detailed description of embodiments of the invention cited as examples.

In the drawings:
Fig. 1 is a top view of a substrate comprising an array of plasmonic nanostructures,
Fig. 2 is a side view of a portion of a substrate on which a plasmonic nanostructure is provided,
Fig. 3 is a flow chart illustrating a method according to an embodiment of the invention,
Fig. 4a is a schematic side view of a sample used in an exemplary embodiment of the method,
Fig. 4b is a schematic top view of the sample in fig. 4a,
Fig. 5 is a SEM image of the sample in fig. 4a, and
Fig. 6 shows optical extinction spectra obtained for various samples.

The drawings are schematic and not drawn to scale.

### DETAILED DESCRIPTION OF EXAMPLE EMBODIMENTS OF THE INVENTION

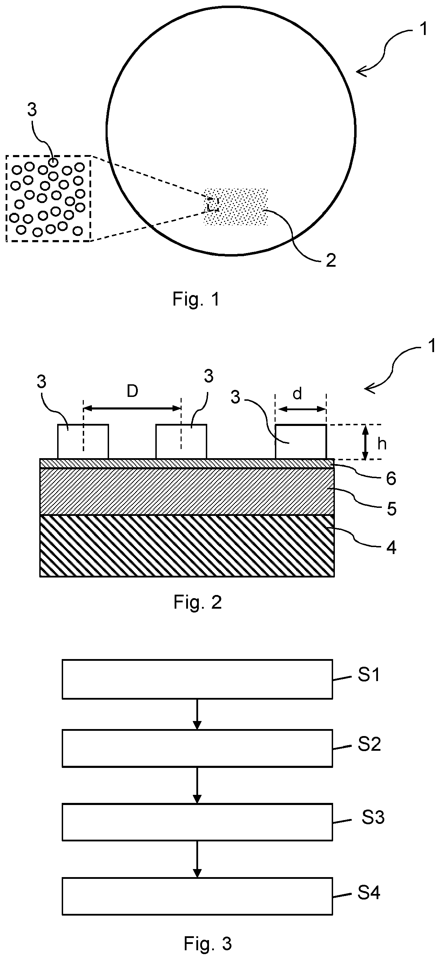

A solid substrate 1 on which an array 2 of plasmonic nanostructures 3 is provided is shown in figs. 1-2. The solid substrate 2 may for example be a silicon wafer 4 or similar, having a functional thin film 5 grown on its top surface. The array 2 of plasmonic nanostructures 3 is provided on a surface portion of the solid substrate 1. A thin protective coating 6 is provided between the thin film 5 and the array 2 of plasmonic nanostructures 3. The plasmonic nanostructures 3 are in the form of metal nanostructures, such as metal disks or metal cylinders having a height h and a diameter d. The portion of the solid substrate 1 on which the array 2 is provided is herein a relatively small surface portion of the substrate 1. A centre-to-centre spacing D between neighbouring nanostructures 3 is shown to be irregular in figs. 1-2, but the nanostructures may alternatively be arranged according to an ordered pattern at regular distances from each other.

A method for determining a material property of the solid substrate according to an embodiment of the invention is illustrated in the flow chart of fig. 3. The method comprises - *inter alia* and as further defined with claim 1 - the following steps:
S1) Providing an array 2 of plasmonic nanostructures 3 on at least one portion of the substrate 1 whose material property is to be determined. In the embodiment shown in figs. 1-2, the material property to be determined is a material property of the thin film 5, although it may in other embodiments be possible to determine a material property of a substrate without any thin film provided thereon. Of course, it is furthermore possible to provide more than one array 2, the arrays being spaced apart from each other, such as to allow determining material properties of different portions of the substrate 1. The step S1 may be preceded by a step of coating the substrate 1 with a dielectric coating 6, and/or a dielectric coating may be provided on top of the plasmonic nanostructures 3. The plasmonic nanostructures 3 may be provided on a surface of the substrate 1 using known nanofabrication or nanomanufacturing techniques, such as lithographic techniques and/or self-assembly techniques.
S2) Illuminating the at least one portion of the substrate 1 on which the array 2 of plasmonic nanostructures 3 is arranged, using light from a light source with known spectral power distribution. Illumination may be carried out using light from a spectral range including visible light and/or near-infrared light, wherein the light may comprise white light and or single-wavelength (laser) light. Alternatively, a tunable light source may be used, such as a tunable laser. The illumination may be in the form of continuous illumination or in the form of one or more light pulses of a short duration.
S3) Determining an optical extinction and/or reflectance peak of the illuminated array 2 of plasmonic nanostructures 3 provided on the substrate 1, depending on whether the substrate 1 is transparent or opaque. Such an optical extinction or reflectance peak may be determined using a spectrophotometer in the case of e.g. a white light source, or a photodetector in the case of a tunable (or single-wavelength with a given spectral broadening) light source. This step may comprise detecting a spectrum comprising at least light reflected off and/or light scattered off the illuminated array, depending on the transparency of the substrate. In the case of an optical extinction spectrum, the spectrum includes optical absorption and scattering. This step may include detection of the intensity of the reflected and/or transmitted light in the case of single-wavelength (with a given spectral broadening) illumination.
S4) Based on the determined optical extinction and/or reflectance peak, determining the material property of the at least one portion of the substrate 1. Generally, the material property could be any material property linked to a refractive index of the substrate 1, and according to the invention, it is a chemical composition and/or an atomic composition of the portion of the substrate 1 on which the array 2 is provided. Tabulated values or a known relation between the refractive index and the atomic / chemical composition may be used to determine the material property from the optical extinction and/or reflectance peak of the optical extinction and/or reflectance spectrum, respectively. Thus, according to the invention, determining the material property comprises comparing the detected optical extinction peak and/or reflectance peak to stored data or a known relation describing said optical extinction peak and/or reflectance peak as a function of the material property.

### EXAMPLE

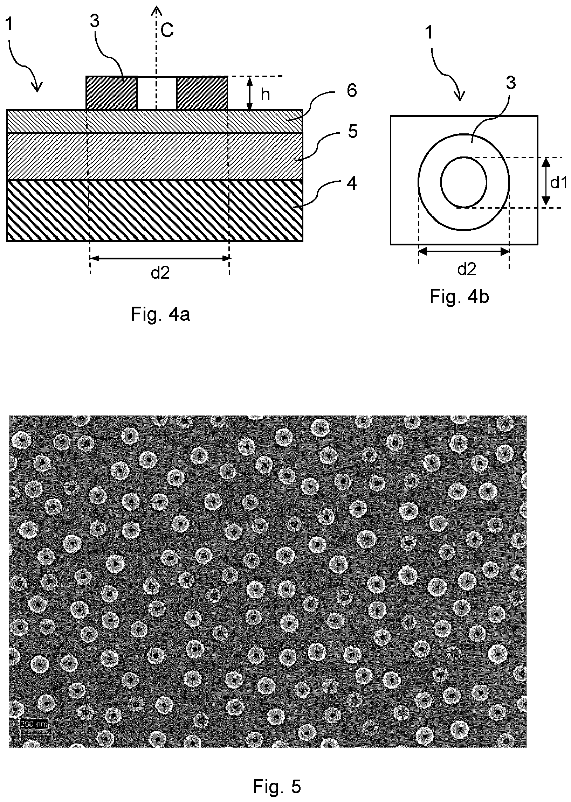

In an exemplary embodiment, the capability of the proposed method was investigated for determining the atomic concentrations of Tb and Co in samples 1 as schematically shown in a sectional side view in fig. 4a and in a top view in fig. 4b. Each sample 1 comprised a ferrimagnetic TbₓCo₁₀₀₋ₓ thin film 5 having a thickness within the range of 20-40 nm, and a refractive Al₂O₃ coating 6 having a thickness of 2-3 nm provided on top of the thin film 5. As plasmonic nanostructures 3, arrays of plasmonic Ag nanorings 3 were provided on top of the TbCo thin films 5 and the Al₂O₃ coating 6, the nanorings 3 being arranged with a central axis C extending perpendicularly to a surface of the substrate 1. The ferrimagnetic TbₓCo₁₀₀₋ₓ thin films 5 were deposited on standard SiO₂ plates 4. The nanorings 3 were fabricated using a hole-mask colloidal lithography technique in accordance with a method described in a previously published article by H. Fredriksson et al., Hole-mask lithography, Adv. Mater., 19, 4297 (2007). The nanorings 3 were concentric, i.e. centrosymmetric, with a geometry determined by material deposition process parameters used during the fabrication. The nanorings 3 exhibited an outer diameter d2 of 110 nm and an inner diameter d1 of 35 nm.

The nanorings 3 formed an extended, up to several cm², short-range-ordered array of amorphously packed plasmonic nanostructures. A scanning electron microscopy (SEM) image of a portion of such an array on the solid substrate comprising the ferrimagnetic TbCo film is shown in fig. 5. The distribution of nanorings 3 is uniform. An average spacing between neighbouring nanorings is approximately 2-3 outer ring diameters d2. In this example, an average height h of the nanorings 3 is approximately 10-15 nm.

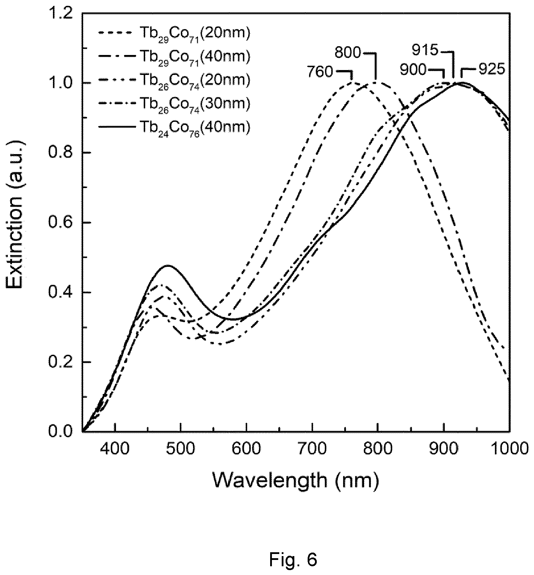

The optical extinction spectra, including optical absorption and scattering, of the prepared samples 1 with Ag nanoring arrays were measured using a commercial spectrophotometer. Several optical spectra from the samples are shown in fig. 6. One plasmonic resonance of the Ag nanoring 3, the so-called bonding mode, depends on the concentrations of Tb and Co in the ferrimagnetic alloy of the thin film 5 and is in the wavelength range of 760-925 nm. The bonding mode in the optical spectra of the samples 1 was used for sensing of atomic concentrations of Tb and Co in the ferrimagnetic TbCo films 5. From the optical spectra, the atomic concentrations of Tb in the ferrimagnetic thin films 5 were determined to be in the range of 24-29 % as listed in table I. The accuracy of the method is well comparable to standard ion beam nuclear analytical methods of Rutherford backscattering spectrometry (RBS) and particle-induced x-ray emission (PIXE).

**Table I**

| Film thickness (nm) | Resonance peak (nm) | Atomic composition |
|---|---|---|
| 20 | 760 | Tb₂₉Co₇₁ |
| 40 | 800 | Tb₂₉Co₇₁ |
| 20 | 900 | Tb₂₆Co₇₄ |
| 30 | 915 | Tb₂₆Co₇₄ |
| 40 | 925 | Tb₂₄Co₇₆ |

It is to be understood that the present invention is not limited to the embodiments described above and illustrated in the drawings; rather, the skilled person will recognize that many changes and modifications may be made within the scope of the appended claims.

## Claims

1. A method for determining a material property of a solid substrate (1), the method comprising:
- providing (S1) an array (2) of plasmonic nanostructures (3) on at least one portion of the substrate (1),
- illuminating (S2) the at least one portion of the substrate (1) on which the array (2) of plasmonic nanostructures (3) is arranged,
- determining (S3) an optical extinction and/or reflectance peak of the illuminated array (2) of plasmonic nanostructures (3) provided on the substrate (1),
- based on the determined optical extinction and/or reflectance peak, determining (S4) the material property of the at least one portion of the substrate (1), wherein determining the material property comprises determining a chemical composition and/or an atomic composition of the at least one portion of the substrate (1) by comparing the detected optical extinction and/or reflectance peak to stored data or a known relation describing said optical extinction and/or reflectance peak as a function of the material property.

2. The method according to claim 1, wherein illuminating the at least one portion of the substrate (1) comprises illuminating the at least one portion of the substrate (1) with light from a spectral range including visible light, and/or near-infrared light, and/or with single-wavelength or essentially single-wavelength light.

3. The method according to claim 1 or 2, wherein determining the optical extinction and/or reflectance peak of the illuminated array (2) of plasmonic nanostructures (3) comprises detecting a spectrum comprising at least light reflected off and/or light scattered off the illuminated array (2).

4. The method according to any one of the preceding claims, wherein the at least one portion of the substrate (1) comprises a metallic material.

5. The method according to claim 4, wherein the metallic material is a magnetic metal alloy comprising at least one element selected from the group of Fe, Co and Ni.

6. The method according to claim 4 or 5, wherein the metallic material is in the form of a thin film (5).

7. The method according to claim 6, wherein the thin film (5) is a terbium-cobalt thin film having an atomic composition TbₓCo₁₀₀₋ₓ, wherein determining the material property comprises determining the number x, or
wherein the thin film (5) is a gadolinium-iron-cobalt thin film having an atomic composition GdₓFe_{y}Co_{z}, and wherein determining the material property comprises determining at least one of the numbers x, y and z.

8. The method according to any one of claims 1-3, wherein the at least one portion of the substrate (1) comprises a titanium carbide (TiC) or tungsten carbide (WC) material thin film.

9. The method according to any one of the preceding claims, further comprising:
- providing a dielectric coating (6) on the substrate (1), such as a dielectric coating (6) comprising aluminium oxide coating,
wherein the array of plasmonic nanostructures is provided on a surface of said dielectric coating (6), or wherein the array (2) of plasmonic nanostructures (3) is provided between the substrate (1) and said dielectric coating (6).

10. The method according to any one of the preceding claims, wherein the plasmonic nanostructures (3) have a mean equivalent diameter of 10-500 nm, or 20-400 nm, or 30-200 nm, as measured in a plane parallel with a surface on which the plasmonic nanostructures are provided.

11. The method according to any one of claims 1-10, wherein the plasmonic nanostructures (3) are metal rings (3) having an outer diameter of 100-300 nm and an inner diameter of 10-100 nm as measured in a plane parallel with a surface on which the metal rings (3) are provided.

12. The method according to any one of the preceding claims, wherein providing the array (2) of plasmonic nanostructures (3) comprises using nanoimprint lithography, or wherein providing the array (2) of plasmonic nanostructures (3) comprises using a colloidal lithography based fabrication method to provide a short-range ordered array (2) of plasmonic nanostructures (3).

13. The method according to any one of the preceding claims, wherein determining the material property comprises comparing the detected optical extinction and/or reflectance peak to stored data describing said optical extinction and/or reflectance peak as a function of the material property.

14. Use of an array (2) of plasmonic nanostructures (3) provided on at least one portion of a solid substrate (1) for determining a material property of the at least one portion of the solid substrate (1) based on an optical extinction and/or reflectance peak of the array (2) of plasmonic nanostructures (3) by comparing the detected optical extinction and/or reflectance peak to stored data or a known relation describing said optical extinction and/or reflectance peak as a function of the material property, the optical extinction and/or reflectance peak being detected when illuminating the at least one portion of the solid substrate (1) on which the array (2) of plasmonic nanostructures (3) is provided, wherein the material property is a chemical composition and/or an atomic composition of the at least one portion of the substrate (1).

15. Use of the array according to claim 14, wherein the at least one portion of the substrate (1) comprises a metallic material, preferably wherein the metallic material is a magnetic metal alloy comprising at least one element selected from the group of Fe, Co and Ni.

## Patentansprüche

1. Verfahren zum Bestimmen einer Materialeigenschaft eines festen Substrats (1), das Verfahren umfassend:
- Bereitstellen (S1) eines Arrays (2) von plasmonischen Nanostrukturen (3) auf mindestens einem Abschnitt des Substrats (1),
- Beleuchten (S2) des mindestens einen Abschnitts des Substrats (1), auf dem das Array (2) von plasmonischen Nanostrukturen (3) angeordnet ist,
- Bestimmen (S3) einer optischen Extinktion und/oder Reflexionsspitze des beleuchteten Arrays (2) von plasmonischen Nanostrukturen (3), das auf dem Substrat (1) bereitgestellt ist,
- basierend auf der bestimmten optischen Extinktion und/oder Reflexionsspitze, Bestimmen (S4) der Materialeigenschaft des mindestens einen Abschnitts des Substrats (1), wobei das Bestimmen der Materialeigenschaft das Bestimmen einer chemischen Zusammensetzung und/oder einer atomaren Zusammensetzung des mindestens einen Abschnitts des Substrats (1) durch Vergleichen der erfassten optischen Extinktion und/oder Reflexionsspitze mit gespeicherten Daten oder einer bekannten Beziehung umfasst, die die optische Extinktion und/oder Reflexionsspitze in Abhängigkeit von der Materialeigenschaft beschreibt.

2. Verfahren nach Anspruch 1, wobei das Beleuchten des mindestens einen Abschnitts des Substrats (1) das Beleuchten des mindestens einen Abschnitts des Substrats (1) mit Licht aus einem Spektralbereich, der sichtbares Licht und/oder Nahinfrarotlicht einschließt, und/oder mit Einzelwellenlängen- oder im Wesentlichen Einzelwellenlängen-Licht umfasst.

3. Verfahren nach Anspruch 1 oder 2, wobei das Bestimmen der optischen Extinktion und/oder Reflexionsspitze des beleuchteten Arrays (2) von plasmonischen Nanostrukturen (3) das Erfassen eines Spektrums umfasst, umfassend mindestens Licht, das von dem beleuchteten Array (2) reflektiert und/oder Licht, das von diesem gestreut wird.

4. Verfahren nach einem der vorstehenden Ansprüche, wobei der mindestens eine Abschnitt des Substrats (1) ein metallisches Material umfasst.

5. Verfahren nach Anspruch 4, wobei das metallische Material eine magnetische Metalllegierung ist, umfassend mindestens ein Element, das aus der Gruppe von Fe, Co und Ni ausgewählt ist.

6. Verfahren nach Anspruch 4 oder 5, wobei das metallische Material in Form eines Dünnfilms (5) vorliegt.

7. Verfahren nach Anspruch 6, wobei der Dünnfilm (5) ein Terbium-Kobalt-Dünnfilm ist, der eine atomare Zusammensetzung TbₓCo₁₀₀₋ₓ aufweist, wobei das Bestimmen der Materialeigenschaft das Bestimmen der Anzahl x umfasst, oder
wobei der Dünnfilm (5) ein Gadolinium-Eisen-Kobalt-Dünnfilm ist, der eine atomare Zusammensetzung GdₓFe_{y}Co_{z} aufweist, und wobei das Bestimmen der Materialeigenschaft das Bestimmen mindestens einer der Zahlen x, y und z umfasst.

8. Verfahren nach einem der Ansprüche 1 bis 3, wobei der mindestens eine Abschnitt des Substrats (1) einen Titancarbid (TiC)- oder Wolframcarbid (WC)-Material-Dünnfilm umfasst.

9. Verfahren nach einem der vorstehenden Ansprüche, ferner umfassend:
- Bereitstellen einer dielektrischen Beschichtung (6) auf dem Substrat (1), wie einer dielektrischen Beschichtung (6), umfassend eine Alum iniumoxidbeschichtung,
wobei das Array von plasmonischen Nanostrukturen auf einer Oberfläche der dielektrischen Beschichtung (6) bereitgestellt ist oder wobei das Array (2) von plasmonischen Nanostrukturen (3) zwischen dem Substrat (1) und der dielektrischen Beschichtung (6) bereitgestellt ist.

10. Verfahren nach einem der vorstehenden Ansprüche, wobei die plasmonischen Nanostrukturen (3) einen mittleren äquivalenten Durchmesser von 10-500 nm oder 20-400 nm oder 30-200 nm aufweisen, gemessen in einer Ebene parallel zu einer Oberfläche, auf der die plasmonischen Nanostrukturen bereitgestellt werden.

11. Verfahren nach einem der Ansprüche 1 bis 10, wobei die plasmonischen Nanostrukturen (3) Metallringe (3) sind, die einen Außendurchmesser von 100-300 nm und einem Innendurchmesser von 10-100 nm aufweisen, wie in einer Ebene parallel zu einer Oberfläche gemessen, auf der die Metallringe (3) bereitgestellt sind.

12. Verfahren nach einem der vorstehenden Ansprüche, wobei das Bereitstellen des Arrays (2) von plasmonischen Nanostrukturen (3) das Verwenden von Nanoprägelithographie umfasst, oder wobei das Bereitstellen des Arrays (2) von plasmonischen Nanostrukturen (3) das Verwenden eines kolloidalen Lithografie-basierten Fertigungsverfahrens umfasst, um ein geordnetes Array (2) mit kurzer Reichweite von plasmonischen Nanostrukturen (3) bereitzustellen.

13. Verfahren nach einem der vorstehenden Ansprüche, wobei das Bestimmen der Materialeigenschaft das Vergleichen der erfassten optischen Extinktion und/oder Reflexionsspitze mit gespeicherten Daten umfasst, die die optische Extinktion und/oder Reflexionsspitze in Abhängigkeit von der Materialeigenschaft beschreiben.

14. Verwendung eines Arrays (2) von plasmonischen Nanostrukturen (3), das auf mindestens einem Abschnitt eines festen Substrats (1) bereitgestellt ist, um eine Materialeigenschaft des mindestens einen Abschnitts des festen Substrats (1) basierend auf einer optischen Extinktion und/oder Reflexionsspitze des Arrays (2) von plasmonischen Nanostrukturen (3) durch Vergleichen der erfassten optischen Extinktion und/oder Reflexionsspitze mit gespeicherten Daten oder einer bekannten Beziehung zu bestimmen, die die optische Extinktion und/oder Reflexionsspitze in Abhängigkeit von der Materialeigenschaft beschreibt, wobei die optische Extinktion und/oder Reflexionsspitze erfasst wird, wenn der mindestens eine Abschnitt des festen Substrats (1) beleuchtet wird, auf dem das Array (2) von plasmonischen Nanostrukturen (3) bereitgestellt ist, wobei die Materialeigenschaft eine chemische Zusammensetzung und/oder eine atomare Zusammensetzung des mindestens einen Abschnitts des Substrats (1) ist.

15. Verwendung des Arrays nach Anspruch 14, wobei der mindestens eine Abschnitt des Substrats (1) ein metallisches Material umfasst, vorzugsweise wobei das metallische Material eine magnetische Metalllegierung ist, umfassend mindestens ein Element, das aus der Gruppe von Fe, Co und Ni ausgewählt ist.

## Revendications

1. Procédé de détermination d'une propriété de matériau d'un substrat solide (1), le procédé comprenant :
- la fourniture (S1) d'un réseau (2) de nanostructures plasmoniques (3) sur au moins une partie du substrat (1),
- l'éclairage (S2) de l'au moins une partie du substrat (1) sur laquelle est agencé le réseau (2) de nanostructures plasmoniques (3),
- la détermination (S3) d'un pic de facteur de réflexion et/ou d'une extinction optique du réseau (2) éclairé de nanostructures plasmoniques (3) fournies sur le substrat (1),
- sur la base du pic de facteur de réflexion et/ou de l'extinction optique déterminés, la détermination (S4) de la propriété de matériau de l'au moins une partie du substrat (1), dans lequel la détermination de la propriété de matériau comprend la détermination d'une composition chimique et/ou d'une composition atomique de l'au moins une partie du substrat (1) en comparant le pic de facteur de réflexion et/ou l'extinction optique détectés à des données stockées ou une relation connue décrivant ledit pic de facteur de réflexion et/ou ladite extinction optique en fonction de la propriété de matériau.

2. Procédé selon la revendication 1, dans lequel l'éclairage de l'au moins une partie du substrat (1) comprend l'éclairage de l'au moins une partie du substrat (1) avec la lumière provenant d'une plage spectrale comportant la lumière visible, et/ou la lumière infrarouge proche, et/ou une lumière à longueur d'onde unique ou essentiellement à longueur d'onde unique.

3. Procédé selon la revendication 1 ou 2, dans lequel la détermination du pic de facteur de réflexion et/ou de l'extinction optique du réseau (2) éclairé de nanostructures plasmoniques (3) comprend la détection d'un spectre comprenant au moins la lumière réfléchie et/ou la lumière diffusée hors du réseau (2) éclairé.

4. Procédé selon l'une quelconque des revendications précédentes, dans lequel l'au moins une partie du substrat (1) comprend un matériau métallique.

5. Procédé selon la revendication 4, dans lequel le matériau métallique est un alliage métallique magnétique comprenant au moins un élément choisi dans le groupe de Fe, Co et Ni.

6. Procédé selon la revendication 4 ou 5, dans lequel le matériau métallique est sous la forme d'un film mince (5).

7. Procédé selon la revendication 6, dans lequel le film mince (5) est un film mince de terbium-cobalt ayant une composition atomique TbₓCo₁₀₀₋ₓ, dans lequel la détermination de la propriété de matériau comprend la détermination du nombre x, ou
dans lequel le film mince (5) est un film mince de gadolinium-ironcobalt ayant une composition atomique GdₓFe_{y}Co_{z} et, dans lequel la détermination de la propriété de matériau comprend la détermination d'au moins l'un des nombres x, y et z.

8. Procédé selon l'une quelconque des revendications 1 à 3, dans lequel l'au moins une partie du substrat (1) comprend un film mince de carbure de titane (TiC) ou de carbure de tungstène (WC).

9. Procédé selon l'une quelconque des revendications précédentes, comprenant en outre :
- la fourniture d'un revêtement diélectrique (6) sur le substrat (1), tel qu'un revêtement diélectrique (6) comprenant un revêtement d'oxyde d'aluminium,
dans lequel le réseau de nanostructures plasmoniques est prévu sur une surface dudit revêtement diélectrique (6), ou dans lequel le réseau (2) de nanostructures plasmoniques (3) est prévu entre le substrat (1) et ledit revêtement diélectrique (6).

10. Procédé selon l'une quelconque des revendications précédentes, dans lequel les nanostructures plasmoniques (3) ont un diamètre équivalent moyen de 10 à 500 nm, ou 20 à 400 nm, ou 30 à 200 nm, tel que mesuré dans un plan parallèle à une surface sur laquelle sont prévues les nanostructures plasmoniques.

11. Procédé selon l'une quelconque des revendications 1 à 10, dans lequel les nanostructures plasmoniques (3) sont des anneaux métalliques (3) ayant un diamètre extérieur de 100 à 300 nm et un diamètre intérieur de 10 à 100 nm, tel que mesuré dans un plan parallèle à une surface sur laquelle sont prévues les anneaux métalliques (3).

12. Procédé selon l'une quelconque des revendications précédentes, dans lequel la fourniture du réseau (2) de nanostructures plasmoniques (3) comprend l'utilisation d'une lithographie par impression nanométrique, ou dans lequel la fourniture du réseau (2) de nanostructures plasmoniques (3) comprend l'utilisation d'un procédé de fabrication basé sur la lithographie colloïdale pour fournir un réseau (2) ordonné à courte portée de nanostructures plasmoniques (3).

13. Procédé selon l'une quelconque des revendications précédentes, dans lequel la détermination de la propriété de matériau comprend la comparaison du pic de facteur de réflexion et/ou de l'extinction optique détectés à des données stockées décrivant ledit pic de facteur de réflexion et/ou ladite extinction optique en fonction de la propriété de matériau.

14. Utilisation d'un réseau (2) de nanostructures plasmoniques (3) prévues sur au moins une partie d'un substrat solide (1) pour déterminer une propriété de matériau de l'au moins une partie du substrat solide (1) sur la base d'un pic de facteur de réflexion et/ou d'une extinction optique du réseau (2) de nanostructures plasmoniques (3) en comparant le pic de facteur de réflexion et/ou l'extinction optique détectés à des données stockées ou une relation connue décrivant ledit pic de facteur de réflexion et/ou ladite extinction optique en fonction de la propriété de matériau, le pic de facteur de réflexion et/ou l'extinction optique étant détectés lors de l'éclairage de l'au moins une partie du substrat solide (1) sur lequel le réseau (2) de nanostructures plasmoniques (3) est prévu, dans laquelle la propriété de matériau est une composition chimique et/ou une composition atomique de l'au moins une partie du substrat (1).

15. Utilisation du réseau selon la revendication 14, dans laquelle l'au moins une partie du substrat (1) comprend un matériau métallique, de préférence dans laquelle le matériau métallique est un alliage métallique magnétique comprenant au moins un élément choisi dans le groupe de Fe, Co et Ni.
